# EUROPÄISCHE PATENTSCHRIFT

(11) **EP 2 759 809 B1**
(45) Veröffentlichungstag und Bekanntmachung des Hinweises auf die Patenterteilung: **12.02.2020**
(21) Anmeldenummer: 14000008.4
(22) Anmeldetag: 03.01.2014
(51) Int. Cl.: G01F 1/66, G01F 15/18

(54) **Ultraschallwandler**
Ultrasonic transducer
Transducteur à ultrasons

(30) Priorität: 28.01.2013 DE 102013001354
(43) Veröffentlichungstag der Anmeldung: 30.07.2014
(73) Patentinhaber: Krohne AG, 4019 Basel (CH)
(72) Erfinder: van Klooster, Jeroen Martin, 4005 GN Tiel (NL); Huijzer, Arie, 3363 BS Sliedrecht (NL)
(74) Vertreter: Gesthuysen Patent- und Rechtsanwälte

(56) Entgegenhaltungen:
- EP-A1- 0 408 148
- EP-A1- 1 783 465
- WO-A1-2012/011272
- WO-A1-2013/097994
- WO-A2-2013/130343

## Beschreibung

Die Erfindung betrifft einen Ultraschallwandler als einen wesentlichen Teil eines Ultraschalldurchflussmessgeräts, mit einem Wandlergehäuse und einem Wandlerelement, wobei das Wandlergehäuse ein Ultraschallfenster, ein Gehäuserohr und einen Gehäuseflansch aufweist und das Wandlerelement entweder an dem dem Medium, dessen Durchflussrate gemessen werden soll, zugewandten Ende des Gehäuserohres oder an dem dem Medium, dessen Durchflussrate gemessen werden soll, abgewandten Ende des Gehäuserohres vorgesehen ist und wobei der Ultraschallwandler mit Hilfe des Gehäuseflansches an einen Wandlerhalter zu befestigen ist und dazu der Gehäuseflansch des Wandlergehäuses zwischen einen Halterflansch des Wandlerhalters und einen Gegenflansch mit Hilfe von Spannschrauben und Gegenmuttern einzuspannen ist.

Druckschriften WO 2012/011272 A1, EP 0 408 148 A1, EP 1 783 465 A1, WO 2013/097994 A1 und WO 2013/130343 A2 offenbaren jeweils einen Ultraschallwandler mit einer entsprechenden Befestigungseinrichtung.

In der Industrie kommt der Mess-, Steuer-, Regel- und Automatisierungstechnik besondere Bedeutung zu. Das gilt insbesondere für die Messtechnik, die Grundlage der Steuer-, Regel- und Automatisierungstechnik ist. Ein bedeutender Bereich der Messtechnik ist die Durchflussmesstechnik (vgl. die umfassende Darstellung von Prof. Dr. sc. nat. Otto Fiedler "Strömungs- und Durchflußmeßtechnik, R. Oldenbourg Verlag München 101992). Für die Durchflussmesstechnik sind von besonderer Bedeutung (siehe "Strömungs-und Durchflußmeßtechnik", aaO) die Durchflussmessung nach mechanischen Wirkprinzipien, insbesondere Schwebekörperdurchflussmessgeräte und Coriolisdurchflussmessgeräte, thermische Durchflussmessgeräte, magnetisch-induktive Durchflussmessgeräte sowie Ultraschalldurchflussmessgeräte.

Bei Ultraschalldurchflussmessgeräten wird der Effekt ausgenutzt, dass in einem in einem Messrohr transportierten Medium der Ausbreitungsgeschwindigkeit des Schallsignals die Transportgeschwindigkeit des Mediums überlagert ist. Die gemessene Ausbreitungsgeschwindigkeit des Schallsignals gegenüber dem Messrohr ist also größer als im ruhenden Medium, wenn das Medium in Richtung des Schallsignals transportiert wird, und die Geschwindigkeit des Schallsignals gegenüber dem Messrohr ist geringer als im ruhenden Medium, wenn das Medium entgegengesetzt der Richtung des Schallsignals transportiert wird. Die Laufzeit des Schallsignals zwischen dem Schallsender und dem Schallempfänger - Schallsender und Schallempfänger sind Ultraschallwandler - hängt aufgrund des Mitführeffekts von der Transportgeschwindigkeit des Mediums gegenüber dem Messrohr und damit gegenüber dem Ultraschallwandler, also gegenüber dem Schallsender und dem Schallempfänger ab.

Im Übrigen ist im Stand der Technik, von dem die Erfindung ausgeht, der Ultraschallwandler mit Hilfe seines Gehäuseflansches an einen Wandlerhalter zu befestigen. Dazu wird der Gehäuseflansch zwischen einen Halterflansch des Wandlerhalters und einen Gegenflansch eingespannt, und zwar mit Hilfe von Spannschrauben und Gegenmuttern.

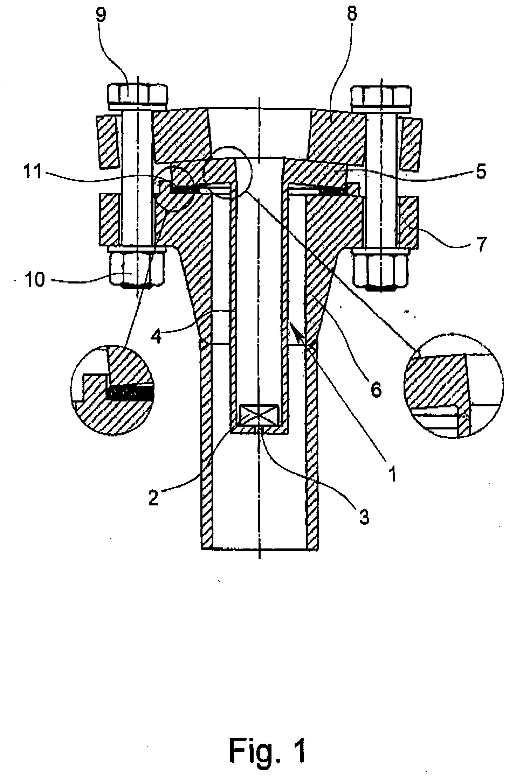

Insbesondere dann, wenn das Medium, dessen Durchflussrate gemessen werden soll, eine hohe Temperatur aufweist, vor allem aber unter einem hohen Druck steht, muss die Befestigung des Ultraschallwandlers an dem Wandlerhalter hohen Anforderungen genügen, sie muss insbesondere auch druckdicht erfolgen. Dabei kann nicht verhindert werden, dass, wie Figur 1 zeigt, beim Anziehen der Spannschrauben der Gegenflansch eine Wölbung erfährt und, wie dies ebenfalls die Figur 1 zeigt, die Wölbung des Gegenflansches zu einer Wölbung des Gehäuseflansches des Wandlergehäuses führt. Verbunden damit ist eine besondere Beanspruchung des Gehäuseflansches des Wandlergehäuses, aber auch eine besondere Beanspruchung des Dichtrings, der zwischen dem Gehäuseflansch des Wandlergehäuses und dem Halterflansch des Wandlerhalters vorgesehen ist.

Der Erfindung liegt folglich die Aufgabe zugrunde, den Ultraschallwandler, von dem die Erfindung ausgeht, so auszugestalten und weiterzubilden, dass das zuvor aufgezeigte Problem nicht mehr auftritt.

Der erfindungsgemäße Ultraschallwandler, bei dem die zuvor hergeleitete und aufgezeigte Aufgabe gelöst ist, ist zunächst und im Wesentlichen dadurch gekennzeichnet, dass der Gehäuseflansch des Wandlergehäuses an seiner dem Gegenflansch zugewandten Seite eine Außenkontur aufweist, die eine Verspannung des Gegenflansches ohne ein Verkippen des Gehäuseflansches zulässt. Erfindungsgemäß wird also dafür gesorgt, dass eine beim Verspannen des Gegenflansches gegen den Gehäuseflansch des Wandlergehäuses auftretende Wölbung des Gegenflansches erfolgen kann, ohne dass dabei der Gehäuseflansch des Wandlergehäuses dem sich wölbenden Gegenflansch "weichen muss". Mit anderen Worten muss also dafür gesorgt werden, dass eine beim Verspannen des Gegenflansches gegen des Gehäuseflansch des Wandlergehäuses auftretende Wölbung des Gegenflansches in einem Bereich hinein erfolgen kann, in dem von dem Gehäuseflansch des Wandlergehäuses Material nicht vorhanden ist.

Das, was zuvor allgemein erläutert worden ist, kann im Einzelnen dadurch realisiert sein, dass der Gehäuseflansch an seiner dem Gegenflansch zugewandten Seite eine abgestufte oder eine abgeschrägte Außenkontur aufweist.

Besonders vorteilhaft ist eine Ausführungsform des erfindungsgemäßen Ultraschallwandlers, bei der der Gehäuseflansch des Wandlergehäuses an seiner dem Gegenflansch zugewandten Seite eine abgerundete Außenkontur aufweist. Vorzugsweise hat die Außenkontur des Gehäuseflansches an seiner dem Gegenflansch zugewandten Seite eine Außenkontur mit einem Rundungsradius, der ein Abrollen des Gegenflansches an der abgerundeten Außenkontur des Gehäuseflansches zulässt.

Im Einzelnen gibt es nun verschiedene Möglichkeiten, den erfindungsgemäßen Ultraschallwandler auszugestalten und weiterzubilden. Dazu wird verwiesen auf die dem Patentanspruch 1 nachgeordneten Patentansprüche und auf die nachfolgend in Verbindung mit den Figuren beschriebenen und in den Figuren dargestellten Ausführungsbeispiele. In den Figuren zeigen
- Fig. 2: ein erstes Ausführungsbeispiel eines erfindungsgemäßen Ultraschallwandlers,
- Fig. 3: ein zweites Ausführungsbeispiel eines erfindungsgemäßen Ultraschallwandlers,
- Fig. 4: ein drittes, bevorzugtes Ausführungsbeispiel eines erfindungsgemäßen Ultraschallwandlers und
- Fig. 5: das in Fig. 4 dargestellte Ausführungsbeispiel eines erfindungsgemäßen Ultraschallwandlers mit angezogenen Spannschrauben, also im verspannten Zustand.

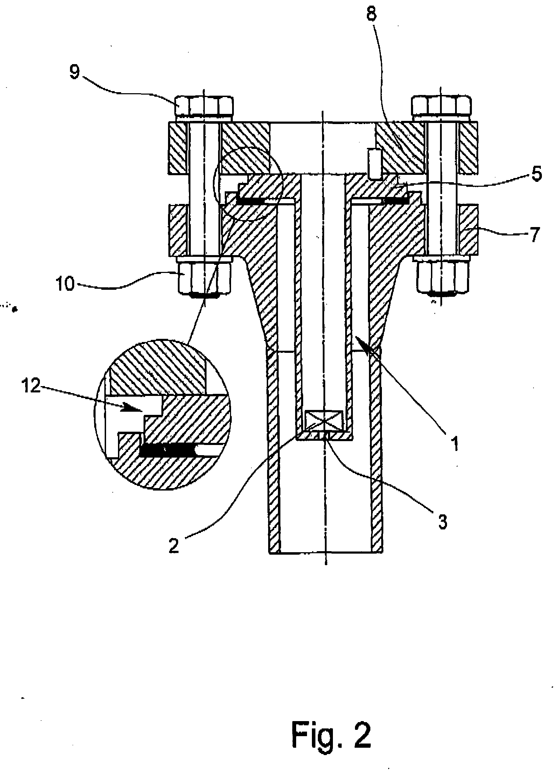

Die Fig. 1 zeigt, wie weiter oben ausgeführt, einen zum Stand der Technik gehörenden Ultraschallwandler, während die Fig. 2 bis 5 erfindungsgemäße Ultraschallwandler zeigen.

Für alle dargestellten Ultraschallwandler gilt, dass sie jeweils einen wesentlichen Teil eines im Übrigen nicht dargestellten Ultraschalldurchflussmessgeräts darstellen und ein Wandlergehäuse 1 und ein Wandlerelement 2 aufweisen. Das Wandlergehäuse 1 weist ein Ultraschallfenster 3, ein Gehäuserohr 4 und einen Gehäuseflansch 5 auf.

Bei allen Ultraschallwandlern, die die Figuren zeigen, ist das Wandlerelement 2 jeweils an dem dem Medium, dessen Durchflussrate gemessen werden soll, zugewandten Ende des Gehäuserohres 4 vorgesehen. Im Gegensatz dazu kann das Wandlerelement 2 an dem dem Medium, dessen Durchflussrate gemessen werden soll, abgewandten Ende des Gehäuserohres 4 vorgesehen sein. Eine solche Ausführungsform eines Ultraschallwandlers, bei dem das Wandlerelement an dem dem Medium, dessen Durchflussrate gemessen werden soll, abgewandten Ende des Gehäuserohres vorgesehen ist, ist zum Beispiel in der deutschen Patentschrift 198 12 458 beschrieben und dargestellt. Dazu, wann und warum man eine solche Ausführungsform wählt, wird auf die vorgenannte vorveröffentlichte Druckschrift verwiesen.

Wie alle Figuren zeigen, ist der Ultraschallwandler mit Hilfe des Gehäuseflansches 5 an einem Wandlerhalter 6 befestigt. Dazu ist der Gehäuseflansch 5 des Wandlergehäuses 1 zwischen einen Halterflansch 7 des Wandlerhalters 6 und einen Gegenflansch 8 mit Hilfe von Spannschrauben 9 und Gegenmuttern 10 eingespannt.

Der Fig. 1 kann man das der Erfindung zugrunde liegende Problem entnehmen. Durch das Verspannen des Gegenflansches 8 gegen den Gehäuseflansch 5 des Wandlergehäuses 1, mit Hilfe der Spannschrauben 9 und der Gegenmuttern 10, ist es zu einer Wölbung des Gegenflansches 8 gekommen. Die Wölbung des Gegenflansches 8 hat auch unmittelbar zu einer Wölbung des Gehäuseflansches 5 des Wandlergehäuses 1 geführt. Daraus resultiert, wie in der Fig. 1 angedeutet, eine hohe Beanspruchung des Gehäuseflansches 5 des Wandlergehäuses 1, aber auch eine hohe Beanspruchung eines zwischen dem Gehäuseflansch 5 des Wandlergehäuses 1 und dem Halterflansch 7 des Wandlerhalters 6 vorgesehenen Dichtrings 11.

Erfindungsgemäß ist nun dafür gesorgt, dass der Gehäuseflansch 5 des Wandlergehäuses 1 an seiner dem Gegenflansch 8 zugewandten Seite eine Außenkontur 12 aufweist, die eine Verspannung des Gegenflansches 8 ohne ein Verkippen des Gehäuseflansches 5 zulässt.

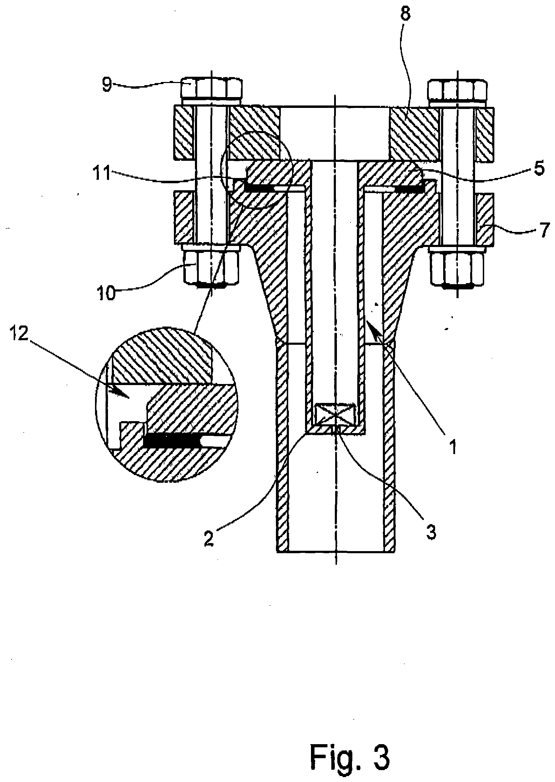

Dem Ausführungsbeispiel nach Fig. 2 weist der Gehäuseflansch 5 des Wandlergehäuses 1 an seiner dem Gegenflansch 8 zugewandten Seite eine abgestufte Außenkontur 12 auf. Im Ausführungsbeispiel nach Fig. 3 weist der Gehäuseflansch 5 des Wandlergehäuses 1 an seiner dem Gegenflansch 8 zugewandten Seite eine abgeschrägte Außenkontur 12 auf.

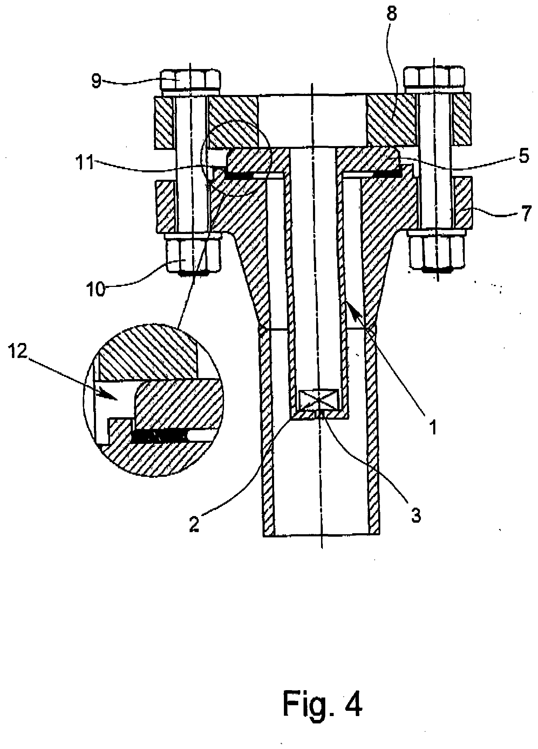

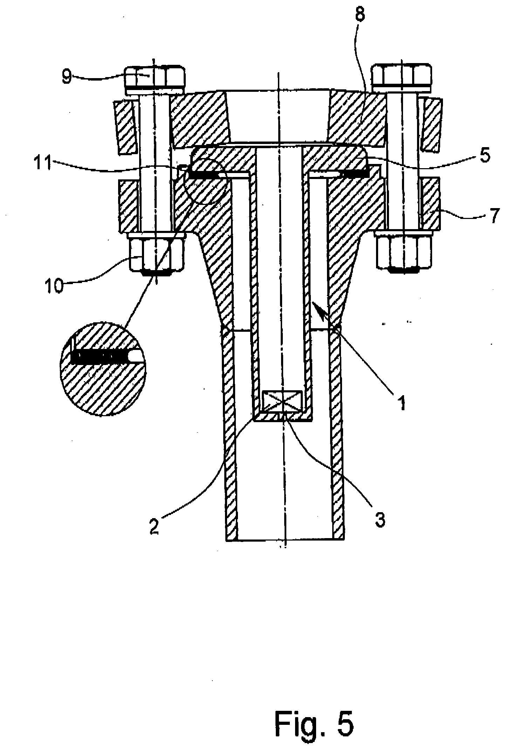

Ein ganz besonders bevorzugtes Ausführungsbeispiel des erfindungsgemäßen Ultraschallwandlers zeigen die Fig. 4 und 5. Bei diesem Ausführungsbeispiel weist der Gehäuseflansch 5 an seiner dem Gegenflansch 8 zugewandten Seite eine abgerundete Außenkontur 12 auf. Dabei hat die an der dem Gegenflansch 8 zugewandten Seite des Gehäuseflansches 5 vorgesehene abgerundete Außenkontur 12 einen Rundungsradius, der ein Abrollen des Gegenflansches 8 an der Außenkontur 12 des Gehäuseflansches 5 zulässt.

Vergleicht man das in den Fig. 4 und 5 dargestellte Ausführungsbeispiel eines erfindungsgemäßen Ultraschallwandlers mit dem in Fig. 1 dargestellten, zum Stand der Technik gehörenden Ultraschallwandler, so wird unmittelbar deutlich, was erfindungsgemäß erreicht worden ist, nämlich die Vermeidung einer besonderen Beanspruchung des Gehäuseflansches 5 des Wandlergehäuses 1, aber auch die Vermeidung einer besonderen Beanspruchung des Dichtrings 11, der zwischen dem Gehäuseflansch 5 des Wandlergehäuses 1 und dem Halterflansch 7 des Wandlerhalters 6 vorgesehen ist.

## Patentansprüche

1. Ultraschallwandler als ein wesentlicher Teil eines Ultraschalldurchflussmessgeräts, mit einem Wandlergehäuse (1) und einem Wandlerelement (2), wobei das Wandlergehäuse (1) ein Ultraschallfenster (3), ein Gehäuserohr (4) und einen Gehäuseflansch (5) aufweist und das Wandlerelement (2) entweder an dem dem Medium, dessen Durchflussrate gemessen werden soll, zugewandten Ende des Gehäuserohrs (4) oder an dem dem Medium, dessen Durchflussrate gemessen werden soll, abgewandten Ende des Gehäuserohres (4) vorgesehen ist, wobei der Ultraschallwandler mit Hilfe des Gehäuseflansches (5) an einen Wandlerhalter (6) zu befestigen ist und dazu der Gehäuseflansch (5) des Wandlergehäuses (1) zwischen einen Halterflansch (7) des Wandlerhalters (6) und einen Gegenflansch (8) mit Hilfe von Spannschrauben (9) und Gegenmuttern (10) einzuspannen ist,
**dadurch gekennzeichnet,**
**dass** der Gehäuseflansch (5) des Wandlergehäuses (1) an seiner dem Gegenflansch (8) zugewandten Seite eine Außenkontur (12) aufweist, die ein Verspannen des Gegenflansches (8) gegen den Gehäuseflansch (5) des Wandlergehäuses (1) ohne ein Verkippen des Gehäuscflansches (5) zulässt, wobei die Außenkontur abgestuft, abgeschrägt oder abgerundet ist.

2. Ultraschallwandler nach Anspruch 1, wobei der Gehäuseflansch (5) des Wandlergehäuses (1) an seiner dem Gegenflansch (8) zugewandten Seite eine abgerundete Außenkontur (12) aufweist, **dadurch gekennzeichnet, dass** die Außenkontur (12) des Gehäuseflansches (5) des Wandlergehäuses (1) einen Rundungsradius hat, der ein Abrollen des Gegenflansches (8) an der Außenkontur (12) des Gehäuseflansches (5) des Wandlergehäuses (1) zulässt.

## Claims

1. An ultrasonic transducer as an essential part of an ultrasonic flowmeter, comprising a transducer housing (1) and a transducer element (2), wherein the transducer housing (1) comprises an ultrasonic window (3), a housing tube (4) and a housing flange (5), and the transducer element (2) is provided either at the end of the housing tube (4) facing towards the medium whose flow rate is to be measured or at the end of the housing tube (4) facing away from the medium whose flow rate is to be measured, wherein the ultrasonic transducer is to be attached to a transducer holder (6) with the help of the housing flange (5) and, for this, the housing flange (5) of the transducer housing (1) is to be clamped between a holder flange (7) of the transducer holder (6) and a opposing flange (8) with the help of retaining screws (9) and lock nuts (10),
**characterized in**
**that** the housing flange (5) of the transducer housing (1) has an outer contour (12) on its side facing the opposing flange (8), which allows the opposing flange (8) to be clamped against the housing flange (5) of the transducer housing (1) without tilting the housing flange (5), wherein the outer contour is stepped, bevelled or rounded.

2. Ultrasonic transducer according to claim 1, wherein the housing flange (5) of the transducer housing (1) has a rounded outer contour (12) on its side facing the opposing flange (8), **characterized in that** the outer contour (12) of the housing flange (5) of the transducer housing (1) has a radius of curvature which permits the opposing flange (8) to roll off on the outer contour (12) of the housing flange (5) of the transducer housing (1).

## Revendications

1. Transducteur d'ultrasons en tant que partie essentielle d'un débitmètre à ultrasons, comprenant un boîtier de transducteur (1) et un élément transducteur (2), le boîtier de transducteur (1) possédant une fenêtre à ultrasons (3), un tube de boîtier (4) et une bride de boîtier (5) et l'élément transducteur (2) se trouvant soit à l'extrémité du tube de boîtier (4) qui fait face au fluide dont le débit doit être mesuré, soit à l'extrémité du tube de boîtier (4) qui est à l'opposé du fluide dont le débit doit être mesuré, le transducteur d'ultrasons étant à fixer à un support de transducteur (6) à l'aide de la bride de boîtier (5) et, pour ce faire, la bride de boîtier (5) du boîtier de transducteur (1) étant à serrer entre une bride de support (7) du support de transducteur (6) et une contre-bride (8) à l'aide de vis de serrage (9) et de contre-écrous (10),
**caractérisé en ce que**
la bride de boîtier (5) du boîtier de transducteur (1) possède, au niveau de son côté qui fait face à la contre-bride (8), un contour extérieur (12) qui permet un serrage de la contre-bride (8) contre la bride de boîtier (5) du boîtier de transducteur (1) sans basculement de la bride de boîtier (5), le contour extérieur étant à gradins, biseauté ou arrondi.

2. Transducteur d'ultrasons selon la revendication 1, la bride de boîtier (5) du boîtier de transducteur (1) possédant un contour extérieur (12) arrondi au niveau de son côté qui fait face à la contre-bride (8), **caractérisé en ce que** le contour extérieur (12) de la bride de boîtier (5) du boîtier de transducteur (1) présente un rayon d'arrondi qui permet un déroulé de la contre-bride (8) contre le contour extérieur (12) de la bride de boîtier (5) du boîtier de transducteur (1).
